# EUROPEAN PATENT SPECIFICATION

(11) **EP 3 235 795 B1**
(45) Date of publication and mention of the grant of the patent: **12.02.2020**
(21) Application number: 17167612.5
(22) Date of filing: 21.04.2017
(51) Int. Cl.: C04B 41/89, C04B 41/85, C04B 41/00, C04B 41/50, C04B 41/52, F01D 5/28

(54) **SLURRY-BASED REACTION BONDED ENVIRONMENTAL BARRIER COATINGS**
SUSPENSIONSBASIERTE REAKTIONSGEBUNDENE UMGEBUNGSSPERRSCHICHTEN
REVÊTEMENTS À BASE DE SUSPENSION LIÉS PAR RÉACTION FORMANT UNE BARRIÈRE ENVIRONNEMENTALE

(30) Priority: 22.04.2016 US 201662326543 P; 14.04.2017 US 201715488037
(43) Date of publication of application: 25.10.2017
(73) Proprietor: Rolls-Royce plc, London SW1E 6AT (GB); Rolls-Royce Corporation, Indianapolis, Indiana 46225-1103 (US)
(72) Inventor: NASIRI, Nasrin Al, London, UB5 5TP (GB); LEE, William Edward, London, SW7 2BP (GB); LANDWEHR, Sean E, Avon, Indianapolis 46123 (US); CHAMBERLAIN, Adam Lee, Mooresville, Indianapolis 46158 (US)
(74) Representative: HGF Limited

(56) References cited:
- EP-A2- 2 284 138
- US-A1- 2006 280 952
- US-A1- 2009 297 718
- APARICIO M ET AL: "Colloidal Stability and Sintering of Yttria-Silica and Yttria-Silica-Alumina aqueous suspensions", JOURNAL OF THE EUROPEAN CERAMIC SOCIETY, ELSEVIER SCIENCE PUBLISHERS, BARKING, ESSEX, GB, vol. 19, no. 9, July 1999 (1999-07), pages 1717-1724, XP004165939, ISSN: 0955-2219, DOI: 10.1016/S0955-2219(98)00267-2

## Description

This application claims the benefit of U.S. Provisional Patent Application No. 62/326,543, filed April 22, 2016.

### TECHNICAL FIELD

The disclosure relates to techniques for forming environmental barrier coatings.

### BACKGROUND

Ceramic or ceramic matrix composite (CMC) materials may be useful in a variety of contexts where mechanical and thermal properties are important. For example, components of high temperature mechanical systems, such as gas turbine engines, may be made from ceramic or CMC materials. Ceramic or CMC materials may be resistant to high temperatures, but some ceramic or CMC materials may react with some elements and compounds present in the operating environment of high temperature mechanical systems, such as water vapor. Reaction with water vapor may result in the recession of the ceramic or CMC material. These reactions may damage the ceramic or CMC material and reduce mechanical properties of the ceramic or CMC material, which may reduce the useful lifetime of the component. Thus, in some examples, a ceramic or CMC material may be coated with an environmental barrier coating, which may reduce exposure of the substrate to elements and compounds present in the operating environment of high temperature mechanical systems.

US 2006/0280952 A1 describes a process for forming a corrosion resistant outer layer over a silicide-containing bond coat layer.

US 2009/0297718 A1 relates to a method of protecting an article from a high temperature environment by forming a slurry coating composition comprising a metallic silicon powder, a rare-earth oxide, an alkaline earth metal oxide and/or an aluminum oxide and a binder effective to chemically stabilize the slurry coating, applying a layer of the slurry coating over a substrate comprising silicon, and heat-treating the slurry coating under conditions sufficient to oxidize the metallic silicon powder and form an alkaline earth metal aluminosilicate, a rare-earth silicate and/or an aluminum silicate bonded to the substrate.

EP 2284138 A2 discloses a water based slurry composition for making an environmental barrier coating.

### SUMMARY

The method of the present invention is defined as in the appended claim 1.

In some examples, the disclosure describes a method that includes heating a silicon-containing substrate at a temperature between about 1200°C and about 1400°C to oxidize a surface of a silicon-containing substrate to form a layer including silica on the surface of the silicon-containing substrate. The method also may include depositing, from a slurry including at least one of ytterbium, yttrium, erbium, or lutetium, a layer including the at least one of ytterbium, yttrium, erbium, or lutetium on the layer including silica. The method further may include heating at least the layer including silica and the layer including the at least one of ytterbium, yttrium, erbium, or lutetium at a temperature between about 1300°C and about 1400°C to cause the silica and the at least one of ytterbium, yttrium, erbium, or lutetium to react and form a layer including at least one of Yb₂SiO₅, Yb₂Si₂O₇, Y₂SiO₅, Y₂Si₂O₇, Er₂SiO₅, Er₂Si₂O₇, Lu₂SiO₅, or Lu₂Si₂O₇.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a flow diagram illustrating an example technique for forming an environmental barrier coating including at least one rare earth silicate.
FIG. 2A is a conceptual cross-sectional diagram illustrating an example article including a substrate, a layer including silica, and a layer including at least one rare earth oxide on the layer including silica.
FIG. 2B is a conceptual cross-sectional diagram illustrating an example article including a substrate and a layer including at least one rare earth silicate on the substrate.
FIG. 3 is a conceptual cross-sectional diagram illustrating an example article including a substrate and a layer including at least one rare earth silicate and a concentration gradient.
FIG. 4 is a plot of X-ray intensity versus diffraction angle 2θ measured using X-ray diffraction for a coating including lutetium silicate formed using a slurry as described herein.
FIGS. 5A-5F are a scanning electron microscopy (SEM) micrograph and energy dispersive spectroscopy (EDS) plots for respective locations within a coating including lutetium silicate formed using a slurry as described herein.
FIG. 6 is a plot of X-ray intensity versus diffraction angle 2θ measured using X-ray diffraction for a coating including ytterbium silicate formed using a slurry as described herein.
FIGS. 7A-7E are a scanning electron microscopy (SEM) micrograph and energy dispersive spectroscopy (EDS) plots for respective locations within a coating including ytterbium silicate formed using a slurry as described herein.
FIG. 8 is a plot of X-ray intensity versus diffraction angle 2θ measured using X-ray diffraction for a coating including yttrium silicate formed using a powder bed.
FIGS. 9A-9D are a scanning electron microscopy (SEM) micrograph and energy dispersive spectroscopy (EDS) plots for respective locations within a coating including yttrium silicate formed using a powder bed.
FIG. 10 is a plot of X-ray intensity versus diffraction angle 2θ measured using X-ray diffraction for a coating including lutetium silicate formed using a powder bed.
FIGS. 11A-11D are a scanning electron microscopy (SEM) micrograph and energy dispersive spectroscopy (EDS) plots for respective locations within a coating including lutetium silicate formed using a powder bed.

### DETAILED DESCRIPTION

The disclosure describes techniques for forming an environmental barrier coating including at least one rare earth silicate. The techniques described herein include oxidizing a silicon-containing substrate to form a layer including silica on the surface of the silicon-containing substrate. Subsequently, at least one rare earth oxide is deposited on the silica layer from a slurry. The silicon-containing substrate, the layer including silica, and the slurry-deposited layer are heated to react the silica and the at least one rare earth oxide. The reaction between the silica and the at least one rare earth oxide forms at least one rare earth silicate in a layer on the silicon-containing substrate. The at least one rare earth silicate may include at least one rare earth monosilicate, at least one rare earth disilicate, or a mixture of at least one rare earth monosilicate and at least one rare earth disilicate.

Oxidizing the silicon-containing substrate to form a layer including silica results in a coherent, substantially continuous oxidation barrier with good adhesion to the substrate. By then reacting the at least one rare earth oxide with the silica, a layer including at least one rare earth silicate and good adhesion to the substrate may be formed. Further, by utilizing a slurry to deposit the at least one rare earth oxide on the layer including silica, intimate contact between the at least one rare earth oxide and the silica is facilitated, and the reaction may be performed at atmospheric pressure. This may be an advantage compared to techniques that utilize high pressures to encourage contact between reactants, as the high pressure may damage the underlying substrate, particularly if the substrate is relatively fragile, of a complex shape, or the like.

EBCs protect ceramic matrix composite (CMC) substrates that include silicon from recession caused by high pressure, high velocity water vapor in environments such as combustion environments in gas turbine engines. Some EBCs are prime reliant coatings, meaning that the EBC must remain on the CMC component for the life of the CMC component. Prime reliant EBCs may fulfill multiple, competing design parameters, including high water vapor stability and thermal expansion compatibility with the underlying CMC. Additionally, some prime reliant EBCs are used on surfaces that are in non-line-of-sight relationship with a coating source during manufacturing. These surfaces are referred to herein as at least partially obstructed surfaces. For example, internal surfaces of gas turbine engine blades, vanes, or bladetracks and areas between doublet or triplet vanes in gas turbine engines may not be able to be put into line-of-sight with a coating source during the manufacture of the coating. Oxidizing the surface of the silicon-containing substrate and using slurry deposition to deposit the at least one rare earth oxide may allow coating of non-line-of-sight surfaces with the coatings described herein, which include at least one rare earth silicate.

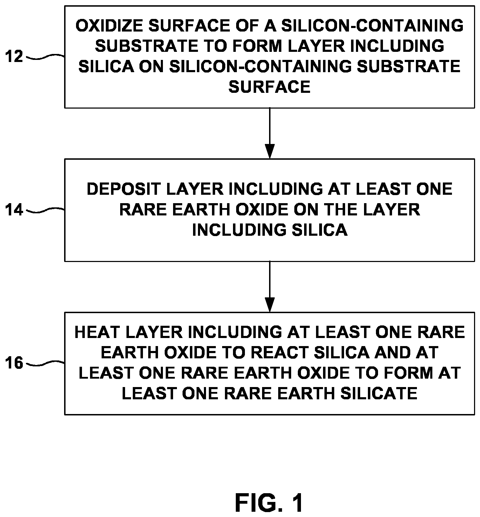

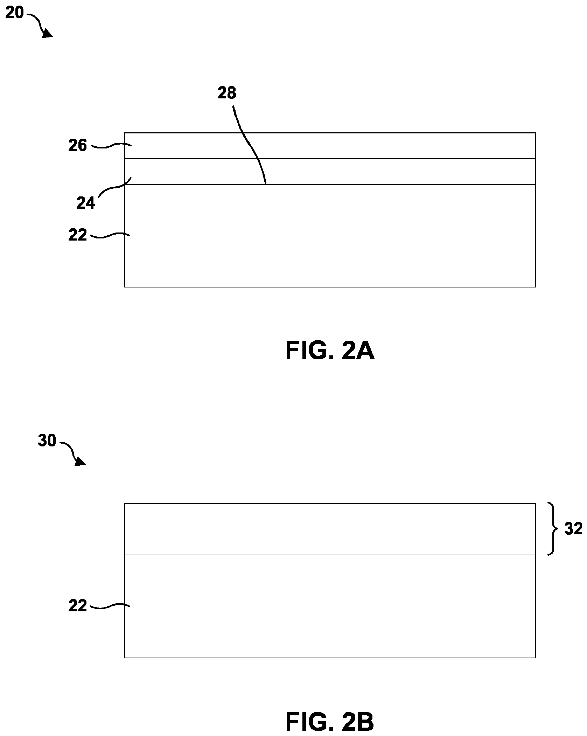

FIG. 1 is a flow diagram illustrating an example technique for forming an environmental barrier coating including at least one rare earth silicate. The technique of FIG. 1 will be described with respect to FIGS. 2A and 2B. FIG. 2A is a conceptual cross-sectional diagram illustrating an example article 20 including a silicon-containing substrate 22, a layer including silica 24, and a layer including at least one rare earth oxide 26 on the layer including silica 24. FIG. 2B is a conceptual cross-sectional diagram illustrating an example article 30 including a silicon-containing substrate 22 and a layer including a rare earth silicate 32 on silicon-containing substrate 22.

The technique of FIG. 1 includes oxidizing a surface 28 of silicon-containing substrate 22 to form a layer including silica 24 on a surface 28 of silicon-containing substrate 22 (12). Silicon-containing substrate 22 may include any material that includes silicon or is based on silicon. In some examples, silicon-containing substrate 22 includes a silicon-containing ceramic or a silicon-containing CMC. Example ceramic materials may include, for example, silicon carbide (SiC), silicon nitride (Si₃N₄), aluminosilicate, silica (SiO₂), transition metal silicides (e.g. WC, Mo₂C, TiC, MoSi₂, NbSi₂, TiSi₂), or the like. In some examples, silicon-containing substrate 12 additionally may include alumina (Al₂O₃), silicon metal, carbon, or the like. In some examples, silicon-containing substrate 12 may include mixtures of two or more of SiC, Si₃N₄, aluminosilicate, silica, transition metal silicides, alumina silicon metal, carbon, or the like.

In examples in which silicon-containing substrate 12 includes a CMC, silicon-containing substrate 12 includes a matrix material and a reinforcement material. The matrix material includes, for example, silicon metal or a ceramic material, such as, SiC, silicon nitride (Si₃N₄), aluminosilicate, silica (SiO₂), transition metal silicides (e.g. WC, Mo₂C, TiC, MoSi₂, NbSi₂, TiSi₂), or other ceramics described herein. The CMC further includes a continuous or discontinuous reinforcement material. For example, the reinforcement material may include discontinuous whiskers, platelets, fibers, or particulates. As other examples, the reinforcement material may include a continuous monofilament or multifilament weave. In some examples, the reinforcement material may include C, SiC, silicon nitride (Si₃N₄), aluminosilicate, silica (SiO₂), transition metal silicides (e.g. WC, Mo₂C, TiC, MoSi₂, NbSi₂, TiSi₂), other ceramic materials described herein, or the like. In some examples, silicon-containing substrate 12 includes a SiC-SiC ceramic matrix composite.

Article 20 may include or be any component of a high temperature mechanical system, such as a gas turbine engine. For example, article 20 may be or be part of a seal segment, a blade track, an airfoil, a blade, a vane, a combustion chamber liner, or the like.

Oxidizing surface 28 of silicon-containing substrate 22 to form layer including silica 24 on a surface 28 of silicon-containing substrate 22 (12) may including heating silicon-containing substrate 22 in an oxidizing atmosphere at a temperature sufficient to initiate the oxidation reaction. The oxidizing atmosphere may include air, water vapor, or an oxygen-rich atmosphere.

In some examples, the temperature at which silicon-containing substrate 22 is heated may be between about 1200°C and about 1600°C, such as about 1200°C and about 1400°C. In some examples, below 1200°C, insufficient silica may form. The upper bound for the temperature range may be selected based on composition of substrate 22, so that the heating does not melt or otherwise degrade substrate 22. In some examples, the temperature at which silicon-containing substrate 22 is heated may be between about 1300°C and about 1350°C, such as about 1300°C or about 1350°C. The time for which silicon-containing substrate 22 is heated may be any time sufficient to form layer including silica 24 to a selected thickness, such as at least about 1 hour, or between about 24 hours and about 100 hours, or between about 24 hours and about 48 hours.

The temperature at which silicon-containing substrate 22 is heated and the time for which silicon-containing substrate 22 is heated may affect a thickness of the resulting layer including silica 24. For example, heating silicon-containing substrate 22 to a higher temperature may increase the rate of reaction and diffusion of oxygen through the already formed silica, and thus may increase a thickness of layer including silica 24 (for a given time). As another example, heating silicon-containing substrate 22 for a longer time may increase a thickness of layer including silica 24 (for a given temperature).

The thickness of layer including silica 24, and thus, the oxidizing conditions, may be selected to provide sufficient silica for reacting with the at least one rare earth oxide later in the technique to form a layer including at least one rare earth silicate having a selected thickness. In some examples, the thickness of layer including silica 24 may be between about 3 microns and about 15 microns, such as between about 3 microns and about 8 microns.

Because layer including silica 24 is formed by the chemical reaction of oxidizing silicon-containing substrate 22, layer including silica 24 may have good adhesion to silicon-containing substrate 22, e.g., compared to a silica layer that is formed by a deposition process, such as vapor deposition or thermal spraying. Additionally, because layer including silica 24 is formed by a chemical reaction of silicon-containing substrate 22, layer including silica 24 may be substantially non-porous (e.g., a porosity of less than about 5 volume percent, defined as a volume of free space in layer including silica 24 divided by the total space occupied by layer including silica 24). Porosity may be measured by sectioning a coating and analyzing porosity using microscopy. A substantially non-porous layer including silica 24 may form a coherent and cohesive barrier layer that forms a useful starting point for forming a layer including at least one rare earth silicate that is to be an environmental barrier coating.

The technique of FIG. 1 also includes depositing, from a slurry, a layer including at least one rare earth oxide 26 on the layer including silica 24 (14). The slurry may include particles including at least one rare earth oxide, a solvent, and, optionally, one or more additives. The at least one rare earth oxide may include any oxide of a rare earth element, including oxides of lutetium (Lu), ytterbium (Yb), thulium (Tm), erbium (Er), holmium (Ho), dysprosium (Dy), terbium (Tb), gadolinium (Gd), europium (Eu), samarium (Sm), promethium (Pm), neodymium (Nd), praseodymium (Pr), cerium (Ce), lanthanum (La), yttrium, (Y) and scandium (Sc). In some examples, the at least one rare earth oxide may include an oxide of at least one of ytterbium (Yb, e.g., Yb₂O₃), yttrium (Y, e.g., Y₂O₃), erbium (Er, e.g., Er₂O₃), or lutetium (Lu, e.g., Lu₂O₃).

In some examples, the particles include more than one rare earth oxide. In some examples, individual particles may include more than one rare earth oxide (e.g., at least two rare earth oxides). In other examples, the particles may include a mixture of at least two rare earth oxides, and individual particles may substantially include a single rare earth oxide. In other words, the individual particles may include multiple rare earth oxides, or the individual particles may include a single rare earth oxide, and different particles each including a respective single rare earth oxide may be mixed to form a mixture of particles including at least two rare earth oxides.

The particles may include one or more additive, such as, for example, alumina; boron or boron oxide; an alkali metal or an alkali metal oxide; an alkaline earth oxide; oxides or silicates of titanium, zirconium, hafnium, tantalum, or niobium; or the like. The additive is present in the particles in an amount less than about 5 weight percent (wt. %), such as less than about 2 wt. % or less than about 1 wt. %. In some examples, such as when the one or more additive includes boron or boron oxide or an alkali metal or alkali metal oxide, the one or more additive may facilitate reaction of silica with rare earth oxide.

The particles may be any size and any shape. In some examples, the diameter of the particles may have a monomodal size distribution (e.g., a single diameter is most prevalent within the diameter distribution of the particles). In other examples, the diameter of the particles may have a multimodal size distribution (e.g., two or more diameters are most prevalent within the diameter distribution of the particles). In some examples, a multimodal size distribution may facilitate packing of the particles in layer including at least one rare earth oxide 26 and facilitate contact between layer including silica 24 and the particles in layer including at least one rare earth oxide 26.

The slurry also may include a solvent. In some examples, the solvent may be polar, such as an aqueous solvent, water, an alcohol (e.g., methanol, isopropanol, or the like), methyl ethyl ketone, or the like. A polar solvent may have high, moderate, or low polarity. An aqueous solvent includes a majority water. In other examples, the solvent may be a non-polar solvent, such as hexane, heptane, mixtures such as naphtha or lacolene, or the like.

In some examples in which the solvent includes a polar solvent, the slurry may additionally include a polyelectrolyte. The polyelectrolyte may stabilize the slurry, e.g., reducing or substantially preventing agglomeration or precipitation out of the slurry of the particles including the at least one rare earth oxide. In some examples, the polyelectrolyte comprises an alkali free polyelectrolyte. The alkali free polyelectrolyte may stabilize the slurry while leaving the particles including at least one rare earth oxide substantially unaffected chemically. In other words, the alkali free polyelectrolyte may not react with the at least one rare earth oxide. In some examples, the polyelectrolyte may include a triammonium salt of aurinicarboxylic acid or an acrylic ammonium salt. The slurry may include between about 0.5 wt. % and about 5 wt. % of the polyelectrolyte.

In some examples, a slurry including a polar solvent additionally may include a non-alkali acid or base. The non-alkali acid or base may modify pH of the slurry and affect dispersability of particles including the at least one rare earth oxide in the slurry. Example non-alkali acids and bases include nitric acid and ammonium hydroxide.

In some examples in which the solvent includes a non-polar or low polarity solvent, the slurry may include a non-polar or low polarity stabilizing agent. The non-polar or low polarity stabilizing agent may include at least one polymeric surfactant, such as at least one of polyethylenimine, polyvinyl alcohol, polyvinylpyrrolidone, or the like. The slurry may include between about 0.5 wt. % and about 5 wt. % of the non-polar or low polarity stabilizing agent.

In some examples, regardless of whether the solvent is polar, low-polarity, or non-polar, the slurry additionally may include a binder (e.g. polyethylene glycol, acrylate co-polymers, latex co-polymers, polyvinyl pyrrolidone co-polymers, polyvinyl butyral, or the like), a dispersant (e.g., triammonium salt of aurinicarboxylic acid (aluminon), ammonium polyacrylate, polyvinyl butyral, a phosphate ester, polyethylene imine, BYK® 110 (available from Byk USA, Inc., Wallingford Connecticut), or the like), or the like.

The composition of the slurry may be selected to achieve desired rheological properties. For example, a slurry with a greater number of particles may have higher viscosity than a slurry with fewer particles. Additionally, the additives and stabilizing agent or polyelectrolyte may affect viscosity of the slurry.

The layer including at least one rare earth oxide 26 may be deposited from the slurry (14) in a single slurry application or multiple slurry applications. In some examples, multiple, thinner applications of the slurry, where each application of the slurry is followed by drying the deposited layer to substantially remove the solvent, may reduce or substantially prevent cracking of the deposited layer. In this way, multiple, thinner applications of the slurry may facilitate formation of a thicker layer including at least one rare earth oxide 26 while reducing or substantially preventing cracking of layer including at least one rare earth oxide 26.

Each of the applications of the slurry may be made using a slurry deposition technique. Example slurry deposition or application techniques include dip coating, spray coating, spin coating, brushing, or the like. The deposition or application technique may be selected based on the geometry of substrate 22. For example, if substrate 22 includes a substantially planar surface, spin coating may be used, while if substrate 22 includes a more complex geometry, dip coating may be used.

Layer including at least one rare earth oxide 26 may be deposited to any suitable thickness. In some examples, the thickness of layer including at least one rare earth oxide 26 may be selected based upon an amount of the at least one rare earth oxide desired to be present for subsequent reaction with silica in layer including silica 24. For example, the thickness of layer including at least one rare earth oxide 26 may be less than 150 micrometers, such as about 20 micrometers.

Although not shown in FIG. 1, after depositing, from the slurry, layer including at least one rare earth oxide 26 on layer including silica 24 (14), the layer including at least one rare earth oxide 26 may be dried to substantially remove the solvent. In some examples, as mentioned above, the layer including at least one rare earth oxide 26 may be formed using a plurality of slurry applications, and each application of slurry may be dried before a subsequent application of slurry is made. In other examples, all the slurry applications may be performed before the layer including at least one rare earth oxide 26 is dried. In still other examples, the separate drying step may be omitted and the layer including at least one rare earth oxide 26 may be dried as the layer 26 is heated to react the at least one rare earth oxide and the silica.

By using a slurry to deposit the layer including at least one rare earth oxide 26, intimate contact between particles in the layer including at least one rare earth oxide 26 and the layer including silica 24 may be made. This may facilitate reaction of the at least one rare earth oxide and the silica without application of high pressure during the reaction. Additionally, the slurry may facilitate intimate contact between particles in the layer including at least one rare earth oxide 26 and the layer including silica 24 in examples in which layer including silica 24 has surface roughness (e.g., due to surface roughness of underlying silicon-containing substrate 22). For example, drying the slurry may facilitate close packing of the particles in layer including at least one rare earth oxide 26, which may improve contact between particles in layer including at least one rare earth oxide 26 and layer including silica 24. In other techniques in which a dry powder is used, intimate contact between the powder and the layer including silica may utilize high pressure during the reaction to bring the powder into intimate contact with the layer including silica. This high pressure may restrict the types (e.g., shapes and constructions) of substrates with which the method may be used, and also may require costly manufacturing apparatuses to generate and support the high pressures.

The technique of FIG. 1 further includes heating at least the layer including silica 24 and the layer including at least one rare earth oxide 26 to react the silica and the at least one rare earth oxide and form a layer including at least one rare earth silicate 32 (FIG. 2B) (16). The at least one rare earth silicate may include at least one rare earth monosilicate, at least one rare earth disilicate, or a mixture of at least one rare earth monosilicate and at least one rare earth disilicate. The rare earth element in the at least one rare earth silicate depends on the rare earth element in the at least one rare earth oxide in layer 26, and may include at least one of lutetium, ytterbium, thulium, erbium, holmium, dysprosium, terbium, gadolinium, europium, samarium, promethium, neodymium, praseodymium, cerium, lanthanum, yttrium, or scandium.

A rare earth disilicate is a compound formed by chemically reacting a rare earth oxide and silica in a particular stoichiometric ratio (1 mole rare earth oxide and 2 moles silica) under sufficient conditions (e.g., heat and/or pressure) to cause the rare earth oxide and the silica to react. A rare earth disilicate is chemically distinct from a mixture of free rare earth oxide and free silica, and is chemically distinct from a rare earth monosilicate. For example, a rare earth disilicate has different chemical and physical properties than a mixture of free rare earth oxide and free silica. Rare earth disilicates generally have a good coefficient of thermal expansion match with silicon-based substrate 22, which may reduce thermal-cycling-generated stress at the interface between layer including at least one rare earth disilicate 32 (FIG. 2B) and silicon-containing substrate 22.

A rare earth monosilicate is a compound formed by chemically reacting a rare earth oxide and silica in a particular stoichiometric ratio (1 mole rare earth oxide and 1 mole silica) under sufficient conditions (e.g., heat and/or pressure) to cause the rare earth oxide and the silica to react. A rare earth monosilicate is chemically distinct from a mixture of free rare earth oxide and free silica, and is chemically distinct from a rare earth disilicate. For example, a rare earth monosilicate has different chemical and physical properties than a mixture of free rare earth oxide and free silica. Rare earth monosilicates generally have a worse coefficient of thermal expansion match with silicon-based substrate 22 than rare earth disilicates, but possess better water vapor stability than rare earth disilicates.

The at least layer including silica 24 and layer including at least one rare earth oxide 26 are heated at a temperature and for a time sufficient to cause the silica and the at least one rare earth oxide to react and form a layer including at least one rare earth silicate 32 (16). In some examples, at least layer including silica 24 and layer including at least one rare earth oxide 26 may be heated at a temperature between about 1200°C and about 1600° for at least 1 hour, such as between about 24 hours and about 100 hours. In other examples, at least layer including silica 24 and layer including at least one rare earth oxide 26 may be heated at a temperature between about 1300°C and about 1400° for between about 24 hours and about 100 hours.

The layer including silica 24 and the layer including at least one rare earth oxide 26 may be heated (16) under a substantially inert or oxidizing atmosphere. As described above, an oxidizing atmosphere may include air, water, or an oxygen rich atmosphere. As the oxygen oxidizes silicon-containing substrate 22 to form silica, heating at least layer including silica 24 and layer including at least one rare earth oxide 26 (16) under an oxidizing atmosphere may provide additional silica for reacting with the at least one rare earth oxide. Alternatively, the atmosphere may be substantially inert with respect to the at least one rare earth oxide and the silica under the heating conditions. For example, an inert atmosphere may include argon, helium, nitrogen, or the like. In some examples, the heating at least the layer including silica 24 and the layer including at least one rare earth oxide 26 (16) may be performed at atmospheric pressure.

The amount of rare earth disilicate or rare earth monosilicate formed during the reaction of silica and the at least one rare earth oxide may depend upon the reaction conditions. For example, for a given heat treatment temperature, a longer treatment time may increase a proportion of rare earth disilicate.

In some examples, during the heating of at least layer including silica 24 and layer including at least one rare earth oxide 26 (16) diffusion between the layers may occur such that rare earth silicate is formed throughout the layer including at least one rare earth silicate 32. In some examples, the resulting layer including at least one rare earth silicate 32 may include a substantially homogeneous composition (e.g., the chemical composition is substantially uniform throughout the volume of the layer including at least one rare earth silicate 32.

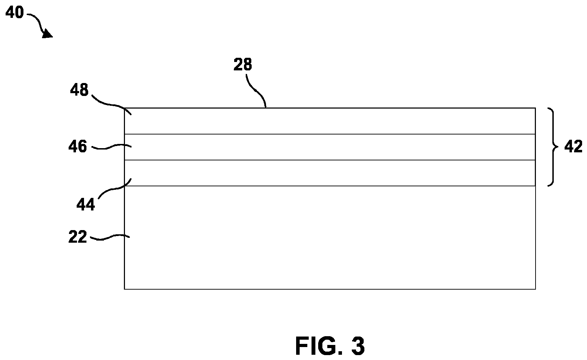

In other examples, the layer including at least one rare earth silicate 32 may include a non-homogeneous composition. For example, the layer including at least one rare earth silicate 32 may include at least one composition gradient. For instance, FIG. 3 is a conceptual cross-sectional diagram illustrating an example article 40 including a silicon-containing substrate 22 and a layer including at least one rare earth silicate 42 that includes a concentration gradient. As shown in FIG. 3, layer 42 may include a first portion 44 adjacent substrate 22, a third portion 48 adjacent outer surface 50 of layer 42, and a second portion 46 between first portion 44 and third portion 48. In some examples, first portion 44 may include free silica (i.e., silica that has not reacted with rare earth oxide to form rare earth silicate), or include more free silica than second portion 46 or third portion 48, as at least part of first portion 44 corresponds to at least part of layer including silica 24 (FIG. 2A). The free silica may, in some examples, be mixed with other elements or compounds, such as rare earth silicate or rare earth oxide.

Second portion 46 is near where the interface between the layer including silica 24 and the layer including at least one rare earth oxide 26 was prior to heating the layers 24 and 26 to reach the silica and rare earth oxide. Hence, second portion may include a greater percentage of rare earth silicate (e.g., rare earth monosilicate, rare earth disicilite, or both) than first portion 44 and third portion 48.

In some examples, third portion 48 may include free rare earth oxide (i.e., rare earth oxide that has not reacted with silica to form rare earth silicate), or include more free rare earth oxide than second portion 46 or first portion 44, as at least part of third portion 48 corresponds to at least part of layer including at least one rare earth oxide 26 (FIG. 2A). The free rare earth oxide may, in some examples, be mixed with other elements or compounds, such as rare earth silicate or silica.

Although FIG. 3 illustrates the layer including at least one rare earth silicate 42 is illustrated as including three distinct portions 44, 46, and 48, in some examples, the concentration gradients of silica, rare earth oxide, and/or rare earth silicate may be substantially continuous rather than discrete levels. In other words, layer including at least one rare earth silicate 42 may not include distinct portions, but may include a substantially continuous composition gradient.

In some examples, during heating of at least layer including silica 24 and layer including at least one rare earth oxide 26 (16), diffusion of elements or compounds from silicon-containing substrate 22 also may occur. For example, if present in silicon-containing substrate 22, one or more of boron, SiC, Si₃N₄, alumina, carbon, aluminosilicate, SiO₂, transition metal silicides, or the like may diffuse into the layer including at least one rare earth silicate 32.

In some examples, heating of at least the layer including silica 24 and the layer including at least one rare earth oxide 26 (16) additionally may cause sintering of the layer including at least one rare earth oxide 26, which may reduce porosity in the layer including at least one rare earth oxide 26. In some examples, this may result in the layer including at least one rare earth silicate 32 or 42 being substantially dense or substantially non-porous. A layer 32 or 42 that is substantially dense or substantially nonporous may provide protection to silicon-containing substrate 22 by preventing water vapor from contacting and reacting with silicon-containing substrate 22. In some examples, a layer with a substantially dense microstructure may have a porosity of less than about 10 vol. %, such as, e.g., less than about 5 vol. %, where porosity is measured as a percentage of pore volume divided by total layer volume.

Although not illustrated in FIG. 1, the technique of FIG. 1 may optionally include smoothing surface 28 of silicon-containing substrate 22 (FIG. 2A) prior to oxidizing surface 28 of a silicon-containing substrate 22 (12). In some examples in which silicon-containing substrate 22 includes a CMC, silicon-containing substrate 22 may include surface roughness that affects aerodynamic characteristics of article 20, that affects formation of layer including silica 24, that affects contact between layer including at least one rare earth oxide 26 with layer including silica, or the like. Smoothing surface 28 of silicon-containing substrate 22 may address at least one of these issues resulting from surface roughness. Surface 28 may be smoothed by mechanical grinding or polishing, chemical mechanical polishing, etching, or the like.

In this way, by using a slurry to deposit the layer including at least one rare earth oxide 26 then reacting the at least one rare earth oxide with silica, a layer including rare earth silicate may be formed that has good adhesion to the underlying substrate, is substantially non-porous, is on a non-line-of-sight surface, or a combination of these characteristics. Use of the slurry may facilitate intimate contact between particles in the layer including at least one rare earth oxide 26 and layer including silica 24. This may facilitate reaction of the at least one rare earth oxide and the silica without application of high pressure during the reaction. Additionally, the slurry may facilitate intimate contact between particles in the layer including at least one rare earth oxide 26 and layer including silica 24 in examples in which layer including silica 24 has surface roughness (e.g., due to surface roughness of underlying silicon-containing substrate 22). In other techniques in which a dry powder is used, intimate contact between the powder and the layer including silica may utilize high pressure during the reaction to bring the powder into intimate contact with the layer including silica. This high pressure may restrict the types (e.g., shapes and constructions) of substrates with which the method may be used, and also may require costly manufacturing apparatuses to generate and support the high pressures.

### EXAMPLES

### Example 1

A slurry including 30 volume percent (vol. %) lutetium oxide (Lu₂O₃) particles having a 4±0.2 µm particle size (available from abcr GmbH, Karlsruhe, Germany) in water was prepared. The slurry also included 0.15 wt. % of a carboylic acid-based dispersant available under the tradename Dolapix CE64 (available from Zschimmer & Schwarz GmbH & Co KG, Lahnstein, Germany), and about 2.0 wt. % polyethylene glycol 10,000 (available from Alfa Aesar, Haverhill, Massachusetts). The pH of the slurry was about 9.5.

A surface of a SiC/SiC CMC was oxidized by heating the SiC/SiC CMC at about 1300°C for about 48 hours. The slurry was then applied to the oxidized surface of the SiC/SiC CMC using dip coating. The coated CMC was then heated at a temperature of about 1350°C for about 48 hours. The sample was then characterized using X-ray diffraction using an X-ray diffraction instrument available from Bruker AXS, Inc., Madison, Wisconsin. X-ray diffraction measurements were carried out in 2θ range from 10° to 80°. Phases were identified using Xpert High Score Plus software (available from PANalytical Inc., Westborough, Massachusetts), using the International Centre for Diffraction Data database. FIG. 4 is a plot of X-ray intensity versus diffraction angle 2θ for the resulting coating. As shown in FIG. 4, the coating included lutetium monosilicate, lutetium disilicate, residual lutetium oxide, and residual silica.

FIGS. 5A-5F are a scanning electron microscopy (SEM) micrograph and energy dispersive spectroscopy (EDS) plots for respective locations within the example coating including lutetium silicate. The SEM micrographs and EDS plots were gathered using a JEOL JSM-6010LA, available from JEOL Ltd, Tokyo, Japan. The coating has a thickness between about 5 µm and about 7 µm and is substantially continuous. FIG. 5B shows the EDS plot of location 52 of FIG. 5A. FIG. 5C shows the EDS plot of location 54 of FIG. 5A. FIG. 5D shows the EDS plot of location 56 of FIG. 5A. FIG. 5E shows the EDS plot of location 58 of FIG. 5A. FIG. 5F shows the EDS plot of location 60 of FIG. 5A. As shown in the EDS plots, each of these locations included Lu, O, and Si in roughly similar proportions.

### Example 2

A slurry including 20 volume percent (vol. %) ytterbium oxide (Yb₂O₃) particles having a 4±0.1 µm particle size (available from abcr GmbH, Karlsruhe, Germany) in water was prepared. The slurry also included 0.7 wt. % of an aurintricarboxytic acid ammonium salt dispersant available under the tradename Alumino from Sigma-Aldrich, St. Louis, Missouri) and about 2.0 wt. % polyethylene glycol 10,000 (available from Alfa Aesar, Haverhill, Massachusetts). The pH of the slurry was about 8.0.

A surface of a SiC/SiC CMC was oxidized by heating the SiC/SiC CMC at about 1300°C for about 48 hours. The slurry was then applied to the oxidized surface of the SiC/SiC CMC using dip coating. The coated CMC was then heated at a temperature of about 1350°C for about 48 hours. The sample was then characterized using X-ray diffraction using an X-ray diffraction instrument available from Bruker AXS, Inc., Madison, Wisconsin. X-ray diffraction measurements were carried out in 2θ range from 10° to 80°. Phases were identified using Xpert High Score Plus software (available from PANalytical Inc., Westborough, Massachusetts), using the International Centre for Diffraction Data database. FIG. 6 is a plot of X-ray intensity versus diffraction angle 2θ for the resulting coating. As shown in FIG. 6, the coating included ytterbium monosilicate, ytterbium disilicate, and residual ytterbium oxide.

FIGS. 7A-7E are a SEM micrograph and EDS plots for respective locations within the example coating including ytterbium silicate. The SEM micrographs and EDS plots were gathered using a JEOL JSM-6010LA, available from JEOL Ltd, Tokyo, Japan. The coating has a thickness between about 15 µm and about 20 µm and is substantially continuous. FIG. 7B shows the EDS plot of location 62 of FIG. 7A. FIG. 7C shows the EDS plot of location 64 of FIG. 7A. FIG. 7D shows the EDS plot of location 66 of FIG. 7A. FIG. 7E shows the EDS plot of location 68 of FIG. 7A. As shown in the EDS plots, each of these locations included Yb, O, and Si in roughly similar proportions.

### Comparative Example 1

A surface of a SiC/SiC CMC was oxidized by heating the SiC/SiC CMC at about 1300°C for about 48 hours. The oxidized CMC was then placed in an yttrium oxide (Y₂O₃) powder bed in an alumina crucible and placed in a furnace for sintering. The yttrium oxide particles had a 3±0.1 µm particle size and were obtained from abcr GmbH, Karlsruhe, Germany. The furnace was then heated at a temperature of about 1350°C for about 48 hours. The sample was then characterized using X-ray diffraction using an X-ray diffraction instrument available from Bruker AXS, Inc., Madison, Wisconsin. X-ray diffraction measurements were carried out in 2θ range from 10° to 80°. Phases were identified using Xpert High Score Plus software (available from PANalytical Inc., Westborough, Massachusetts), using the International Centre for Diffraction Data database. FIG. 8 is a plot of X-ray intensity versus diffraction angle 2θ for the resulting coating. As shown in FIG. 8, the coating included yttrium monosilicate, yttrium disilicate, and residual silica.

FIGS. 9A-9D are a scanning electron microscopy (SEM) micrograph and energy dispersive spectroscopy (EDS) plots for respective locations within the example coating including yttrium silicate. The SEM micrographs and EDS plots were gathered using a JEOL JSM-6010LA, available from JEOL Ltd, Tokyo, Japan. The coating was discontinuous and non-homogeneous. FIG. 9B shows the EDS plot of location 72 of FIG. 9A. FIG. 9C shows the EDS plot of location 74 of FIG. 9A. FIG. 9D shows the EDS plot of location 76 of FIG. 9A. As shown in the EDS plots, locations 72 and 76 included Y, O, and Si in roughly similar proportions, while location 74 included Si and O, but substantially no Y.

### Comparative Example 2

A surface of a SiC/SiC CMC was oxidized by heating the SiC/SiC CMC at about 1300°C for about 48 hours. The oxidized CMC was then placed in a lutetium oxide (Y₂O₃) powder bed in an alumina crucible and placed in a furnace for sintering. The lutetium oxide particles had a 4±0.2 µm particle size and were obtained from abcr GmbH, Karlsruhe, Germany. The furnace was then heated at a temperature of about 1350°C for about 48 hours. The sample was then characterized using X-ray diffraction using an X-ray diffraction instrument available from Bruker AXS, Inc., Madison, Wisconsin. X-ray diffraction measurements were carried out in 2θ range from 10° to 80°. Phases were identified using Xpert High Score Plus software (available from PANalytical Inc., Westborough, Massachusetts), using the International Centre for Diffraction Data database. FIG. 10 is a plot of X-ray intensity versus diffraction angle 2θ for the resulting coating. As shown in FIG. 10, the coating included lutetium monosilicate, lutetium disilicate, residual lutetium oxide, and residual silica.

FIGS. 11A-11D are a scanning electron microscopy (SEM) micrograph and energy dispersive spectroscopy (EDS) plots for respective locations within the example coating including lutetium silicate. The SEM micrographs and EDS plots were gathered using a JEOL JSM-6010LA, available from JEOL Ltd, Tokyo, Japan. The coating was discontinuous and non-homogeneous. FIG. 11B shows the EDS plot of location 82 of FIG. 11A. FIG. 11C shows the EDS plot of location 84 of FIG. 11A. FIG. 11D shows the EDS plot of location 86 of FIG. 11A. As shown in the EDS plots, location 82 included Lu, O, and Si, while locations 84 and 86 included Si and O, but substantially no Lu.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

Various examples have been described. These and other examples are within the scope of the following claims.

## Claims

1. A method comprising:
oxidizing a surface of a silicon-containing substrate to form a layer including silica on the surface of the silicon-containing substrate;
depositing, from a slurry including particles comprising less than 5 wt. % of at least one additive and a balance of at least one rare earth oxide, a layer including the at least one rare earth oxide and any additive present on the layer including silica; and
heating at least the layer including silica and the layer including the at least one rare earth oxide and any additive present to cause the silica and the at least one rare earth oxide to react and form a layer including at least one rare earth silicate.

2. The method of claim 1, wherein oxidizing the surface of the silicon-containing substrate comprises heating the silicon-containing substrate in an oxidizing atmosphere at a temperature between about 1200°C and about 1400°C for between about 24 hours and about 100 hours.

3. The method of claim 1 or 2, wherein the silicon-containing substrate comprises at least one of a silicon-containing ceramic or a silicon-containing ceramic matrix composite.

4. The method of claim 3, wherein the silicon-containing substrate comprises a silicon carbide-silicon carbide ceramic matrix composite.

5. The method of any one of claims 1 to 4, wherein the slurry comprises particles comprising the at least one rare earth oxide, a polar solvent, and a polyelectrolyte.

6. The method of claim 5, wherein the polyelectrolyte comprises triammonium salt of aurinicarboxylic acid or an acrylic ammonium salt.

7. The method claim 5 or 6, wherein the slurry further comprises a non-alkali acid or base.

8. The method of any one of claims 1 to 4, wherein the slurry comprises particles comprising the at least one rare earth oxide, a non-polar solvent, and a stabilizing agent comprising at least one of polyethylenimine, polyvinyl alcohol, or polyvinylpyrrolidone.

9. The method of claim 8, wherein the slurry comprises between 0.5 wt. % and 5 wt. % of the stabilizing agent.

10. The method of any one of claims 1 to 9, further comprising heating the layer including the at least one rare earth oxide to remove substantially all of a solvent of the slurry.

11. The method of any one of claims 1 to 10, wherein the at least one rare earth oxide includes at least one of Yb₂O₃, Y₂O₃, Er₂O₃, or Lu₂O₃.

12. The method of any one of claims 1 to 11, wherein the at least one rare earth silicate comprises at least one of a rare earth monosilicate or a rare earth disilicate.

13. The method of claim 12, wherein the at least one rare earth silicate comprises at least one of Yb₂SiO₅, Yb₂Si₂O₇, Y₂SiO₅, Y₂Si₂O₇, Er₂SiO₅, Er₂Si₂O₇, Lu₂SiO₅, or Lu₂Si₂O₇.

14. The method of any one of claims 1 to 13, wherein heating at least the layer including silica and the layer including the at least one rare earth oxide to cause the silica and the at least one rare earth oxide to react and form the layer including the at least one rare earth silicate comprises wherein heating at least the layer including silica and the layer including the at least one rare earth oxide at a temperature between about 1300°C and about 1400°C for between about 24 hours and about 100 hours.

15. The method of any one of claims 1 to 14, wherein the layer including the at least one rare earth silicate further comprises free silica and free rare earth oxide, wherein the at least one rare earth silicate further comprises a concentration gradient, wherein a concentration of free silica is highest adjacent the surface of the silicon-containing substrate, and wherein a concentration of free rare earth oxide is highest adjacent an outer surface of the layer including the at least one rare earth silicate.

## Patentansprüche

1. Verfahren, das Folgendes umfasst:
Oxidieren einer Oberfläche eines siliciumhaltigen Substrats, um eine Schicht zu bilden, die Kieselsäure auf der Oberfläche des siliciumhaltigen Substrats beinhaltet;
Abscheiden, aus einer Aufschlämmung, die Teilchen beinhaltet, die weniger als 5 Gew.-% von mindestens einem Zusatzmittel und einen Rest von mindestens einem Seltenerdoxid beinhalten, einer Schicht, die mindestens ein Seltenerdoxid und ein beliebiges Zusatzmittel, das auf der Schicht vorhanden ist, einschließlich Kieselsäure, beinhaltet; und
Erhitzen von mindestens der Schicht, die Kieselsäure beinhaltet, und der Schicht, die mindestens ein Seltenerdoxid und ein beliebiges Zusatzmittel beinhaltet, das vorhanden ist, um die Kieselsäure und das mindestens eine Seltenerdoxid dazu zu veranlassen, zu reagieren und eine Schicht zu bilden, die mindestens ein Seltenerdsilikat beinhaltet.

2. Verfahren nach Anspruch 1, wobei das Oxidieren der Oberfläche des siliciumhaltigen Substrats ein Erhitzen des siliciumhaltigen Substrats in einer oxidierenden Atmosphäre bei einer Temperatur zwischen etwa 1200 °C und etwa 1400 °C während zwischen etwa 24 Stunden und etwa 100 Stunden umfasst.

3. Verfahren nach Anspruch 1 oder 2, wobei das siliciumhaltige Substrat mindestens eins von einer siliciumhaltigen Keramik oder einem siliciumhaltigen Keramikmatrixverbundstoff umfasst.

4. Verfahren nach Anspruch 3, wobei das siliciumhaltige Substrat einen Siliciumcarbid-Siliciumcarbidkeramikmatrixverbundstoff umfasst.

5. Verfahren nach einem der Ansprüche 1 bis 4, wobei die Aufschlämmung Teilchen umfasst, die mindestens ein Seltenerdoxid, ein polares Lösungsmittel und ein Polyelektrolyt umfassen.

6. Verfahren nach Anspruch 5, wobei das Polyelektrolyt Triammoniaksalz von Aurinicarboxylsäure oder ein Acrylammoniumsalz umfasst.

7. Verfahren nach Anspruch 5 oder 6, wobei die Aufschlämmung ferner eine nicht alkalische Säure oder Base umfasst.

8. Verfahren nach einem der Ansprüche 1 bis 4, wobei die Aufschlämmung Teilchen beinhaltet, die das mindestens eine Seltenerdoxid, ein nicht polares Lösungsmittel und ein Stabilisierungsmittel umfassen, das mindestens ein Polyethylenimin, Polyvinylalkohol oder ein Polyvinylpyrrolidon umfasst.

9. Verfahren nach Anspruch 8, wobei die Aufschlämmung zwischen 0,5 Gew.-% und 5 Gew.-% des Stabilisierungsmittels umfasst.

10. Verfahren nach einem der Ansprüche 1 bis 9, das ferner ein Erhitzen der Schicht umfasst, die das mindestens eine Seltenerdoxid beinhaltet, um im Wesentlichen das gesamte Lösungsmittel aus der Aufschlämmung zu entfernen.

11. Verfahren nach einem der Ansprüche 1 bis 10, wobei das mindestens eine Seltenerdoxid mindestens eins von Yb₂O₃, Y₂O₃, Er₂O₃, oder Lu₂O₃ beinhaltet.

12. Verfahren nach einem der Ansprüche 1 bis 11, wobei das mindestens eine Seltenerdsilikat mindestens eins von einem Seltenerdmonosilikat oder einem Seltenerddisilikat umfasst.

13. Verfahren nach Anspruch 12, wobei das mindestens eine Seltenerdsilikat mindestens eins von Yb₂SiO₅, Yb₂Si₂O₇, Y₂SiO₅, Y₂Si₂O₇, Er₂SiO₅, Er₂Si₂O₇, Lu₂SiO₅, oder Lu₂Si₂O₇ umfasst.

14. Verfahren nach einem der Ansprüche 1 bis 13, wobei das Erhitzen der mindestens einen Schicht, die Kieselsäure beinhaltet, und der Schicht, die mindestens ein Seltenerdoxid beinhaltet, um die Kieselsäure und das mindestens eine Seltenerdoxid dazu zu veranlassen, zu reagieren und die Schicht zu bilden, die das mindestens eine Seltenerdsilikat beinhaltet, wobei das Erhitzen von mindestens der Schicht, die Kieselsäure und der Schicht, die das mindestens eine Seltenerdoxid beinhaltet, bei einer Temperatur zwischen etwa 1300 °C und etwa 1400 °C während zwischen etwa 24 Stunden und etwa 100 Stunden umfasst.

15. Verfahren nach einem der Ansprüche 1 bis 14, wobei die Schicht, die mindestens ein Seltenerdsilikat beinhaltet, ferner freie Kieselsäure und freies Seltenerdoxid umfasst, wobei das mindestens eine Seltenerdsilikat ferner einen Konzentrationsgradienten umfasst, wobei eine Konzentration von freier Kieselsäure am höchsten benachbart zu der Oberfläche des siliciumhaltigen Substrats ist und wobei eine Konzentration von freiem Seltenerdoxid am höchsten benachbart zu einer äußeren Fläche der Schicht ist, die das mindestens eine Seltenerdsilikat beinhaltet.

## Revendications

1. Procédé comprenant :
l'oxydation d'une surface d'un substrat contenant du silicium afin de former une couche incluant de la silice sur la surface du substrat contenant du silicium ;
le dépôt, à partir d'une bouillie incluant des particules comprenant moins de 5 % en poids d'au moins un additif et un reste d'au moins un oxyde de terres rares, une couche incluant l'au moins un oxyde de terres rares et tout additif présent sur la couche incluant la silice ; et
le chauffage d'au moins la couche incluant la silice et la couche incluant l'au moins un oxyde de terres rares et tout additif présent pour amener la silice et l'au moins un oxyde de terres rares à réagir et à former une couche incluant au moins un silicate de terres rares.

2. Procédé selon la revendication 1, dans lequel l'oxydation de la surface du substrat contenant du silicium comprend le chauffage du substrat contenant du silicium sous une atmosphère oxydante à une température comprise entre environ 1200 °C et environ 1400 °C pendant environ 24 heures à environ 100 heures.

3. Procédé selon la revendication 1 ou la revendication 2, dans lequel le substrat contenant du silicium comprend au moins l'un parmi une céramique contenant du silicium ou un composite de matrice céramique contenant du silicium.

4. Procédé selon la revendication 3, dans lequel le substrat contenant du silicium comprend un composite de matrice céramique contenant du carbure de silicium de carbure de silicium.

5. Procédé selon l'une quelconque des revendications 1 à 4, dans lequel la bouillie comprend des particules comprenant l'au moins un oxyde de terres rares, un solvant polaire, et un polyélectrolyte.

6. Procédé selon la revendication 5, dans lequel le polyélectrolyte comprend un sel de triammonium de l'acide aurinicarboxylique ou un sel d'ammonium acrylique.

7. Procédé selon la revendication 5 ou la revendication 6, dans lequel la bouillie comprend en outre un acide non alcalin ou une base non alcaline.

8. Procédé selon l'une quelconque des revendications 1 à 4, dans lequel la bouillie comprend des particules comprenant l'au moins un oxyde de terres rares, un solvant non polaire, et un agent de stabilisation comprenant au moins l'un parmi la polyéthylénimine, l'alcool polyvinylique, ou la polyvinylpyrrolidone.

9. Procédé selon la revendication 8, dans lequel la bouillie comprend entre 0,5 % en poids et 5 % en poids de l'agent de stabilisation.

10. Procédé selon l'une quelconque des revendications 1 à 9, comprenant en outre le chauffage de la couche incluant l'au moins un oxyde de terres rares afin d'éliminer sensiblement tout le solvant de la bouillie.

11. Procédé selon l'une quelconque des revendications 1 à 10, dans lequel l'au moins un oxyde de terres rares inclut au moins un composé parmi Yb₂O₃, Y₂O₃, Er₂O₃, ou Lu₂O₃.

12. Procédé selon l'une quelconque des revendications 1 à 11, dans lequel l'au moins un silicate de terres rares comprend au moins l'un parmi un monosilicate de terres rares ou un disilicate de terres rares.

13. Procédé selon la revendication 12, dans lequel l'au moins un silicate de terres rares comprend au moins un composé parmi YbzSiOs, Yb₂Si₂O₇, Y₂SiO₅, Y₂Si2O₇, Er₂SiO₅, Er₂Si₂O₇, Lu₂SiO₅, ou Lu₂Si₂O₇.

14. Procédé selon l'une quelconque des revendications 1 à 13, dans lequel le chauffage d'au moins la couche incluant la silice et la couche incluant l'au moins un oxyde de terres rares pour amener la silice et l'au moins un oxyde de terres rares à réagir et à former la couche incluant l'au moins un silicate de terres rares comprend dans lequel le chauffage d'au moins la couche incluant la silice et la couche incluant l'au moins un oxyde de terres rares à une température entre environ 1300 °C et environ 1400 °C pendant environ 24 heures à environ 100 heures.

15. Procédé selon l'une quelconque des revendications 1 à 14, dans lequel la couche incluant l'au moins un silicate de terres rares comprend en outre de la silice libre et un oxyde de terres rares libre, dans lequel l'au moins un silicate de terres rares comprend en outre un gradient de concentration, dans lequel une concentration de silice libre est la plus élevée adjacente à la surface du substrat contenant du silicium, et dans lequel une concentration de l'oxyde de terres rares libre est la plus élevée adjacente à une surface extérieure de la couche incluant l'au moins un silicate de terres rares.
